# EUROPÄISCHE PATENTSCHRIFT

(11) **EP 3 659 718 B1**
(45) Veröffentlichungstag und Bekanntmachung des Hinweises auf die Patenterteilung: **16.06.2021**
(21) Anmeldenummer: 18209076.1
(22) Anmeldetag: 29.11.2018
(51) Int. Cl.: B07B 13/18, B07B 1/46, G05B 13/02, G05B 23/02, B01D 35/143, B07B 1/28

(54) **SYSTEM UND VERFAHREN ZUR ÜBERWACHUNG EINER SIEBMASCHINE**
METHOD AND SYSTEM FOR MONITORING A FILTERING MACHINE
SYSTÈME ET PROCÉDÉ DE SURVEILLANCE D'UN CRIBLE À TAMIS

(43) Veröffentlichungstag der Anmeldung: 03.06.2020
(73) Patentinhaber: ALLGAIER WERKE GmbH, 73066 Uhingen (DE)
(72) Erfinder: Trojosky, Mathias, 73230 Kirchheim unter Teck (DE)
(74) Vertreter: Bosch Jehle Patentanwaltsgesellschaft mbH

(56) Entgegenhaltungen:
- DE-B4- 10 154 816
- DE-T2- 60 030 715
- JP-A- 2007 136 382
- US-A- 6 138 109
- US-B2- 7 516 851
- CHEN XUEFENG ET AL: "Basic research on machinery fault diagnostics: Past, present, and future trends", FRONTIERS OF MECHANICAL ENGINEERING, HIGHER EDUCATION PRESS, HEIDELBERG, Bd. 13, Nr. 2, 6. November 2017 (2017-11-06), Seiten 264-291, XP036633949, ISSN: 2095-0233, DOI: 10.1007/S11465-018-0472-3 [gefunden am 2017-11-06]
- SHARP MICHAEL ET AL: "A survey of the advancing use and development of machine learning in smart manufacturing", JOURNAL OF MANUFACTURING SYSTEMS, SOCIETY OF MANUFACTURING ENGINEERS, DEARBORN, MI, US, Bd. 48, 5. März 2018 (2018-03-05), Seiten 170-179, XP085479443, ISSN: 0278-6125, DOI: 10.1016/J.JMSY.2018.02.004

## Beschreibung

Gegenstand der vorliegenden Erfindung ist ein System sowie ein Verfahren zur Überwachung einer Siebmaschine.

Aus dem Stand der Technik sind verschiedene Vorrichtungen und Verfahren zur Überwachung von Siebmaschinen bekannt. In verschiedenen industriellen Bereichen stellt die Überwachung der qualitätsgerechten Funktion von Siebmaschinen eine dringende Notwendigkeit dar. Immer wieder kommt es zu beträchtlichen Betriebsunterbrechungen, Schäden oder Verlusten wegen defekter Siebgewebe in Siebmaschinen. Durch einen nicht erkannten Riss im Siebgewebe gelangt eine häufig große Menge nicht spezifikationsgerechten Schüttguts gröberer Körnung in die Feinfraktion.

Wird ein Siebriss spät erkannt, muss eine entsprechend große Menge Feststoff verworfen oder nach erfolgter Reparatur des Siebgewebes nochmals über die Siebmaschine gefahren werden. Wird eine eventuell sehr feine Beschädigung eines Siebgewebes nicht erkannt, so kann durch die Auslieferung fehlerhaften Materials und durch die eventuelle Weiterverarbeitung beim Endkunden ein beträchtlicher Folgeschaden in der weiteren Verarbeitung verbunden mit verunreinigten oder fehlerhaften Endprodukten die Folge sein.

Es existieren daher verschiedene Technologien, d.h. Vorrichtungen und Verfahren, um Risse oder andere Defekte in einem Siebgewebe und daraus folgende Verunreinigungen gesiebter Produkte frühzeitig zu erkennen. Neben indirekten Verfahren zur Erkennung von Siebrissen, bei denen der durch das Sieb laufende Feingutstrom überwacht und mittels verschiedener Methoden auf das Vorkommen nicht spezifikationsgerechter, grober Partikel überwacht wird, werden für diese Aufgabe direkte Messmethoden eingesetzt, die an der Überwachung des Siebgewebes selbst und seiner Intaktheit und Unversehrtheit ansetzen.

Aus der Patentschrift DE 10154816 B4 ist ein indirektes Verfahren bekannt, bei dem das gesiebte Feingut auf einen schwingungsfähigen Körper geleitet wird, welcher sich vorzugsweise im Auslauf einer Siebmaschine befindet. Ziel ist es, die durch den Aufprall von Partikeln auf den Schwingkörper angeregten Schwingungen bzw. Schallwellen elektronisch aufzunehmen und auszuwerten. Im Falle eines Siebrisses würden die im Feingut enthaltenen Grobpartikel ein vom Normalzustand abweichendes Schallmuster erzeugen, welches durch ein empfindliches elektronisches System aufgenommen und ausgewertet wird. Dieses System ist keine direkte Messmethode am Siebgewebe, sondern analysiert nur das gesiebte Produkt. Durch dieses System kann keine vollständige Analyse der gesamten gesiebten Feststoffmenge durchgeführt werden, da der Analyseaufwand hierfür zu groß wäre. Da nur ein Teil der gesiebten Feststoffmenge analysiert wird, ist das Analyseergebnis mit einer entsprechenden statistischen Unsicherheit behaftet.

Weiterhin sind optoelektronische Systeme bekannt, die auf den Messen PowTech 2011 und PowTech 2016 vorgestellt wurden und mit optoelektronischen Mitteln permanent den Strom gesiebten Feingutes überwachen. Dabei können Abweichungen von einem voreingestellten Kornspektrum elektronisch erkannt und ausgewertet werden. Allerdings werten auch diese Systeme nur eine kleine Probemenge des gesamten Feststoffstromes aus und sind als indirekt wirkende Systeme ebenfalls mit einer entsprechenden statistischen Unsicherheit behaftet.

Aus den Patentschriften EP 2 340 130 B1 und US 8 607 988 B2 ist eine Siebmaschine bekannt, bei der ein Siebgewebe aus Kunststoff zumindest teilweise mit einer elektrisch leitfähigen Beschichtung in Gestalt von die Siebfläche überquerenden Bahnen versehen ist. Mittels einer an diese Leiterbahnen angelegten Spannung oder eines in diese Leiterbahnen eingeprägten Stromes wird ein Siebriss derart detektiert, dass der Stromfluss im Falle eines Siebrisses unterbrochen wird und eine Spannungs- bzw. Stromänderung feststellbar ist. Das System eignet sich naturgemäß nicht für elektrisch leitfähiges Siebgut wie z.B. Metallpulver oder elektrisch leitfähige, z.B. metallische, Siebgewebe.

Weiterhin ist aus der Patentschrift DE 4324066 C2 ein System bekannt, bei dem ein Siebgewebe aus zwei unterschiedlichen Materialien, in einer ersten Richtung aus elektrisch leitfähigen Drahtfäden, insbesondere Kettfäden, und in einer zweiten Richtung aus elektrisch nicht leitfähigen Kunststofffäden, sogenannten Schussfäden, ausgeführt ist. An ausgedehnten parallelen Elektroden auf den beiden Seiten des Siebgewebes, zwischen denen die elektrisch leitfähigen Drahtfäden parallel verlaufen, wird eine Spannung angelegt, so dass eine messbare, insbesondere sprunghafte, Stromänderung durch das Siebgewebe feststellbar ist, wenn einer oder mehrere dieser Drahtfäden reißen oder brechen. Ein Bruch der nicht leitfähigen Kunststofffäden in der zweiten Richtung des Siebgewebes kann nicht festgestellt werden. Erwähnt werden anstelle elektrisch leitfähiger Drahtfäden auch Lichtleiter oder Hohlfäden, die mit einer Stoffströmung oder einem Druck, bzw. mit Licht beaufschlagt sind, und ebenfalls einen Bruch anzeigen können.

Eine ähnliche technische Lösung ist aus der Patentanmeldung EP 1 806 185 A1 bekannt, welche ebenfalls leitfähige Bahnen aufweist, aus denen ein Siebgewebe gefertigt ist.

Eine andere technische Lösung ist aus den Patentschriften US 7 516 851 B2 und EP 1 603 687 B1 bekannt, wobei elektromagnetische Wellen im Radiofrequenzbereich genutzt werden. Hierbei wird oberhalb und unterhalb des Siebes jeweils ein Sender bzw. ein Empfänger angebracht. Bei einem Siebriss treten elektromagnetische Wellen im Radiofrequenzbereich durch das Sieb hindurch und können mittels des Empfängers aufgefangen und ausgewertet werden.

Eine ähnliche technische Lösung ist unter Nutzung von Mikrowellen bekannt. Hierbei arbeiten Sender und Empfänger nicht im Radiofrequenzbereich, sondern im Mikrowellenbereich. Erforderlich ist eine gegen Mikrowellen resistente und abgedichtete Ausführung der gesamten Siebmaschine. Außerdem unterliegen staub- und pulverförmige Siebgüter mit niedriger Zündenergie durch die eingebrachte Mikrowellenenergie einer erheblichen Explosionsgefahr.

Aus der Patentanmeldung JP H11 -290781 A ist eine Siebmaschine bekannt, bei der Stromverlauf und Spannungsverlauf an einem Ultraschallerzeuger, der eine Ultraschallwelle auf das Siebgewebe aufprägt, hinsichtlich Amplitude und Phase kontinuierlich überwacht und ausgewertet werden. Im Falle eines Siebrisses wird durch einen elektronischen Phasensensor eine Änderung der Phasenverschiebung zwischen Strom und Spannung und damit eine veränderte Scheinleistungsaufnahme des Ultraschallerzeugers festgestellt und mit elektronischen Mitteln ausgewertet. Die durch einen Siebriss verursachte Änderung der Scheinleistungsaufnahme ist jedoch sehr gering und von anderen Effekten stark überlagert, was eine zuverlässige Auswertung erheblich erschwert.

Aus dem Gebrauchsmuster JP H04-046867 Y ist eine Vorrichtung zur Erkennung eines Siebrisses bekannt, die mittels eines nahe am Sieb angeordneten Hochfrequenz-Schallsensors bzw. eines Ultraschall-Mikrophons ein hochfrequentes Reißgeräusch aufnimmt und erkennt, welches durch das Reißen des Siebes erzeugt wird. Dieser Effekt ist sehr klein und kurzzeitig und von starken anderen Geräuschen, wie z.B. dem Geräusch des Siebgutes bei einer Siebung, nur schwer zu unterscheiden, so dass auch bei dieser Lösung eine zuverlässige Erkennung eines Siebrisses erheblich erschwert ist.

Aus der Patentanmeldung JP 2008-224261 A ist ein Verfahren zur Siebrisserkennung für Siebe und Siebmaschinen bekannt, bei dem ein akustischer Sensor an der Siebvorrichtung angebracht ist. Der Sensor nimmt ein akustisches Signal auf, welches durch den Kontakt zwischen Siebgut und Siebnetz im normalen Betrieb mit intaktem Siebnetz erzeugt wird und erkennt darüber hinaus ein zusätzliches akustisches Signal, welches im Falle eines Siebrisses durch die Rissfragmente erzeugt wird. Das aufgenommene Signal wird mit bereits vorgegebenen Referenzwerten verglichen und auf dieser Grundlage eine Risserkennung festgestellt. Auch bei dieser Lösung überlagern andere Effekte, wie z.B. wechselnde Eigenschaften des Siebgutes und eine dadurch verursachte Änderung des aufgenommenen akustischen Signals die Zuverlässigkeit und Reproduzierbarkeit der Erkennung eines Siebrisses ganz erheblich. Dies liegt insbesondere daran, dass der vorgegebene Referenzwert lediglich für eine bestimmte Konfiguration des Siebgewebes sowie des jeweils aktuell gegebenen Betriebszustandes der Siebmaschine ausreichend gut funktioniert.

Die Patentanmeldung JP 2007-136382 A betrifft ein Verfahren zur Diagnose der Verschlechterung eines Siebgewebes, bei dem das Siebgewebe mit einer UltraschallSchwingung angeregt wird.

Das US-Patent Nr. 6,138,109 beschreibt ein Störungsdiagnose- und Reparaturleitsystem und -verfahren, bei dem eine Zahlenmatrix, die den Zustand eines komplexen Binärsystems angibt, als Eingabevektor für eine neuronale Netzwerkmusterverarbeitungsfähigkeit verwendet wird, die darauf ausgerichtet ist, Fehlfunktionstypen von Mustern zu unterscheiden.

In dem Artikel "A survey of the advancing use and development of machine learning in smart manufacturing" von M. Sharp et al. (veröffentlicht im Journal of Manufacturing Systems 48 (2018); 170-179) werden Veröffentlichungen betreffend die Fertigungsindustrie untersucht, um den Aufwand für die Weiterentwicklung des maschinellen Lernens in der Fertigungsindustrie zu quantifizieren. Der Artikel identifiziert sowohl prominente Bereiche der Verwendung von maschinellem Lernen als auch populäre Algorithmen. Der Artikel stellt insbesondere die aktuellen Schwerpunkte und Lücken in der Anwendung von maschinellem Lernen für die Fertigungsindustrie dar, wobei der Schwerpunkt auf der bereichsübergreifenden Wissensnutzung liegt.

Der Erfindung liegt somit die Aufgabe zugrunde, eine Vorrichtung und ein Verfahren bereitzustellen, mit dessen Hilfe die Nachteile des Standes der Technik, insbesondere bei der Überwachung von Siebmaschinen überwunden werden. Diese Aufgabe wird durch das erfindungsgemäße System mit den Merkmalen gemäß Anspruch 1, durch das Verfahren mit den Merkmalen gemäß Anspruch 11 sowie durch das Computerprogramm mit den Merkmalen gemäß Anspruch 14 gelöst. Vorteilhafte Ausgestaltungen der vorliegenden Erfindung sind in den Unteransprüchen 2 bis 10 und 12 bis 13 angegeben.

Das erfindungsgemäße System zur Überwachung einer Siebmaschine umfasst die Siebmaschine mit einem Siebkörper und einem Siebgewebe; eine Anregungsvorrichtung, die dazu ausgelegt ist, ein breitbandiges Schwingungsspektrum auf das Siebgewebe der Siebmaschine aufzuprägen; einen Schwingungsaufnehmer, der dazu ausgestaltet ist, eine Schwingungsantwort des Siebgewebes der Siebmaschine aufzunehmen, wobei die Schwingungsantwort die Reaktion des Siebgewebes auf das aufgeprägte breitbandige Schwingungsspektrum angibt; und eine Signalverarbeitungsvorrichtung zur digitalen Verarbeitung und Auswertung der Schwingungsantwort. Dabei umfasst die Signalverarbeitungsvorrichtung einen lernfähigen Algorithmus, der auf Methoden der künstlichen Intelligenz basiert, der mit Schwingungsantworten von einem oder mehreren Vergleichs-Siebgeweben in Bezug steht, und der dazu ausgelegt ist, die durch den Schwingungsaufnehmer aufgenommene Schwingungsantwort zu charakterisieren. Die Charakterisierung der aufgenommenen Schwingungsantwort erfolgt mit Hilfe von Fehlersignaturen, die kennzeichnend sind für Abweichungen der aufgenommenen Schwingungsantwort zwischen einem Normalzustand des Siebgewebes und einem Fehlerzustand des Siebgewebes. Der Normalzustand charakterisiert das Siebgewebe ohne Defekt, der Fehlerzustand charakterisiert das Siebgewebe mit einem Defekt.

Fehlersignaturen sind damit zweckmäßige Indikatoren für Veränderungen des Siebgewebes.

Die ein oder mehreren Vergleichs-Siebgewebe können das Siebgewebe der zu überwachenden Siebmaschine selbst und/oder andere Siebgewebe umfassen.

Die Schwingungsantwort steht mit einer auf das Siebgewebe der zu überwachenden Siebmaschine aufgeprägten Schwingung in Bezug. Erfindungsgemäß gibt die Schwingungsantwort die Reaktion des Siebgewebes auf die aufgeprägte Schwingung an. Die Schwingungsantwort ist daher ein Indikator für Einflüsse jeglicher Art auf das Siebgewebe. Insbesondere ist es möglich, durch Auswertung bzw. Analyse der Schwingungsantwort Defekte im Siebgewebe, wie z.B. Risse, Abrasion, Dehnungen, Verstopfungen oder Maschenerweiterungen, zu detektieren. Die Schwingungsantwort kann von unterschiedlichen Faktoren abhängen, wie z.B. der Geometrie, dem Material und der Struktur des Siebgewebes. Des Weiteren führen Veränderungen im Siebgewebe, z.B. ein entstandener Riss, zu veränderten Schwingungsantworten. Diese können auf Reflexions- und/oder Beugungseffekte der aufgeprägten Schwingung an Störstellen des Siebgewebes zurückgeführt werden. Auch das Prasseln von Schüttgut auf das Siebgewebe beeinflusst die Schwingungsantwort. Veränderungen der Schwingungsantworten bilden dabei in charakteristischer Weise den veränderten Zustand des Siebgewebes ab, beispielweise durch Verschiebungen ihres Frequenzspektrums oder durch Änderungen der Amplitude in einem bzw. in der Regel mehreren Bereichen des Frequenzspektrums.

Erfindungsgemäß basiert der lernfähige Algorithmus auf Methoden der künstlichen Intelligenz (KI). Künstliche Intelligenz ist ein Teilgebiet der Informatik mit dem Ziel, Maschinen zu befähigen, Aufgaben selbstständig und mit einem optimalen Ergebnis zu lösen.

Der Vorteil eines lernfähigen Algorithmus zur Charakterisierung von Schwingungsantworten, welcher mit Schwingungsantworten von einem oder mehreren Vergleichs-Siebgeweben in Bezug steht, besteht unter anderem darin, Defekte, wie beispielsweise Risse, des Siebgewebes der zu überwachenden Siebmaschine, zuverlässig zu detektieren. Des Weiteren kann sich das System selbstständig auf verschiedene Siebanordnungen, Siebtypen mit unterschiedlichen Eigenschaften, verschiedene Siebgeometrien und Siebgewebe einstellen. Selbst langsam ablaufende kontinuierliche Veränderungen der Siebgewebeeigenschaften durch die normale Abnutzung des Siebgewebes, auch vor Entstehung eines ausgeprägten Defekts, können durch stetiges Lernen des Systems systematisch charakterisiert werden. Dies eröffnet u.a. die Möglichkeit der sog. vorausschauenden Wartung (engl. predictive maintanence). Darüber hinaus ist eine zusätzliche Nachjustierung dabei trotz der sich verändernden Siebgewebeeigenschaften nicht notwendig, sondern erfolgt selbständig durch das lernfähige System.

Besonders bevorzugt steht der lernfähige Algorithmus mit Schwingungsantworten von einer Vielzahl von Vergleichs-Siebgeweben in Bezug. Dadurch kann sich das lernfähige System auf eine große Anzahl bzw. Vielfalt von Siebanordnungen, Siebtypen, Siebgeometrien, Siebgeweben und deren (veränderliche) Eigenschaften einstellen.

Das erfindungsgemäße System hat damit den Vorteil, dass die Charakterisierung und Erkennung von Schwingungsantworten als direkte Messmethode am Siebgewebe umsetzbar ist. Im Gegensatz zu bisher bekannten Methoden müssen Charakterisierung und Erkennung von Defekten im Siebgewebe nicht durch die statische Vorgabe von Erkennungskriterien erfolgen, sondern diese Kriterien können selbstständig erlernt werden, und können sich stetig selbst optimieren. Schlussendlich kann dies die Betriebszeit einer Siebmaschine steigern, eine höhere Prozesssicherheit bei der Fraktionierung ermöglichen und den Wartungsaufwand durch die sich stetig verbessernde Fehlererkennung des Systems minimieren.

Es ist zweckmäßig, wenn die Fehlersignaturen durch das erfindungsgemäße System oder den erfindungsgemäßen lernfähigen Algorithmus selbst ermittelt werden.

Zweckmäßigerweise basiert der lernfähige Algorithmus auf dem Maschinellen Lernen (im engl. Machine Learning). Das Maschinelle Lernen ist eine Methode der künstlichen Intelligenz. Maschinelles Lernen ist derart ausgebildet, selbstständig zu lernen, um somit Muster bzw. Gesetzmäßigkeiten von aufgenommenen Schwingungsantworten, auch wenn diese sehr komplex, überlagert oder von äußeren Störeinflüssen verändert sind, selbst zu bestimmen.

Vorteilhafterweise weist der lernfähige Algorithmus ein künstliches neuronales Netz auf. Dabei handelt es sich um eine besondere Form des Maschinellen Lernens, dem ein bestimmtes Verhalten antrainiert werden kann. Nachfolgend werden beispielhaft zwei mögliche Formen des Trainings beschrieben. Weitere Formen des Trainings werden weiter unten beschrieben.

Besonders bevorzugt werden Schwingungsantworten von den Vergleichs-Siebgeweben als Eingangsdaten in den Algorithmus eingegeben, woraus dieser entweder mit oder ohne zusätzliche Eingabe von vorgegebenen Zielwerten Gesetzmäßigkeiten bestimmt. Zielwerte sind beispielsweise vorab charakterisierte Schwingungsantworten bestimmter Zustände des Siebgewebes. Bei Zielwerten kann es sich beispielsweise um Schwingungsantworten defekter oder intakter Siebgewebe handeln; eine Einteilung in weitere Zustände bzw. Klassen von Zuständen ist erfindungsgemäß auch möglich. Werden vorgegebene Zielwerte berücksichtigt, dann ermittelt der lernfähige Algorithmus mit Hilfe von Eingangsdaten und entsprechenden Zielwerten umfassenden Datenpaaren zunächst Erkennungskriterien, die es ihm später erlauben, eine auf der zu überwachenden Siebmaschine aufgenommene Schwingungsantwort zu charakterisieren. Dabei handelt es sich um das sog. Training des Algorithmus. Anders ausgedrückt, die Erkennungskriterien sind zweckmäßig derart bestimmt, dass eine bestmögliche Vorhersage des Zustands des Siebgewebes auf Grundlage der Datenpaare Eingangsdaten/Zielwerte getroffen werden kann. Bevorzugt kommen in diesem Fall Vergleichs-Siebgewebe zum Einsatz, die von dem Siebgewebe der zu überwachenden Siebmaschine verschieden sind. Zweckmäßigerweise sind die Vergleichs-Siebgewebe von dem Siebgewebe der zu überwachenden Siebmaschine zunächst ähnlich und später teilweise oder im Wesentlichen verschieden.

Anstelle von vorgegebenen Zielwerten ist es auch möglich, dass der Algorithmus anhand von Mustern bzw. Gesetzmäßigkeiten in aufgenommenen Schwingungsantworten des Siebgewebes der zu überwachenden Siebmaschine eine Klassifizierung der Schwingungsantworten vornimmt. In diesem Fall ist das Vergleichs-Siebgewebe das Siebgewebe der zu überwachenden Siebmaschine. Die Klassifizierung der Schwingungsantworten erfolgt zweckmäßig in defekte Siebgewebe und intakte Siebgewebe; weitere Klassen sind erfindungsgemäß allerdings auch möglich. Werden Schwingungsantworten, die von Siebgeweben mit Defekten stammen, und Schwingungsantworten, die von intakten Siebgeweben stammen, in den lernfähigen Algorithmus eingegeben und durch diesen verglichen, so kann der Algorithmus selbstständig Muster bzw. Gesetzmäßigkeiten in den Schwingungsantworten erkennen. Die Muster bzw. Gesetzmäßigkeiten erlauben eine Klassifizierung in unterschiedliche Zustände des Siebgewebes. Mit jeder weiteren Charakterisierung einer eingegebenen Schwingungsantwort kann der Algorithmus hinzulernen, d.h. er wird trainiert. Fortschreitendes Training des lernfähigen Algorithmus mit weiteren Schwingungsantworten, die Siebgewebe mit oder ohne Defekt kennzeichnen, ermöglichen dem Algorithmus, verschiedene Zustände des Siebgewebes der zu überwachenden Siebmaschine immer genauer zu klassifizieren. Demnach können durch ein umfassendes Training aufgenommene Schwingungsantworten differenziert charakterisiert und so eine hohe Vielfalt von unterschiedlichen Zuständen des Siebgewebes generiert werden. Es kann aber auch zweckmäßig sein, durch gezieltes Training die Menge von Zuständen des Siebgewebes absichtlich sehr beschränkt zu halten. Dies ist insbesondere dann sinnvoll, wenn die Anzahl der verschiedenen Zustände der Siebgewebe gering sein soll und wenige unterschiedlich klassifizierte Schwingungsantworten ausreichen. Darüber hinaus kann dieses gezielte Training des lernfähigen Algorithmus zu einer kürzeren Trainingsdauer führen als ein umfassendes Training.

Auch ist es mit dem Algorithmus möglich, sich verändernden Störeinflüssen (Nebengeräusche von Maschinen in der Umgebung des Siebgewebes, Dämpfung, Temperaturschwankungen, vorbeifahrende Autos, etwaige Servicearbeiten usw.) in den aufgenommenen Schwingungsantworten, welche sonst Fehlersignaturen überlagern und maskieren, durch gezieltes Training anzupassen. So kann das Training des Algorithmus dezidiert durch die Charakterisierung von Schwingungsantworten erfolgen, die durch Störeinflüsse beeinflusst sind.

Vorzugsweise umfassen die Vergleichs-Siebgewebe Siebgewebe, die von dem Siebgewebe der zu überwachenden Siebmaschine verschieden sind. Dadurch können in einer fortgeschrittenen Lernphase des lernfähigen Algorithmus Zustände von zu überwachenden Siebgeweben vorab so charakterisiert werden, dass die Erkennung von defekten Siebgeweben durch den lernfähigen Algorithmus auch für bisher unbekannte oder nicht speziell trainierte Siebgewebe und Betriebsbedingungen möglich wird. Weiterhin ist es möglich, nach Einbeziehung sämtlicher Schwingungsantworten der Vergleichs-Siebgewebe, das Training durch die weitere Charakterisierung der durch den Schwingungsaufnehmer aufgenommenen Schwingungsantworten fortzusetzen, um die Menge der verschiedenen Zustände des Siebgewebes zu erhöhen, oder abzuschließen, um die Trainingszeit auf ein neues Siebgewebe oder auf einen neuen Betriebszustand zu verkürzen. Vorzugsweise beträgt die Trainingszeit nicht mehr als wenige Minuten. Diese Ausgestaltung ist besonders vorteilhaft für das sog. überwachte Lernen oder für das sog. teilüberwachte Lernen des lernfähigen Algorithmus. Diese beiden Formen des Lernens werden nachfolgend weiter beschrieben.

Zweckmäßigerweise basiert der lernfähige Algorithmus auf dem überwachten Lernen (englisch: supervised learning). Das überwachte Lernen ist eine besondere Form des Maschinellen Lernens. Es ist von Vorteil, Schwingungsantworten durch einen lernfähigen Algorithmus zu charakterisieren, welcher auf dem überwachten Lernen beruht.

Basiert der lernfähige Algorithmus auf dem überwachten Lernen, wird die aufgenommene Schwingungsantwort beispielweise mit bekannten Fehlersignaturen eines oder mehrerer Vergleichs-Siebgeweben verglichen. Beim überwachten Lernen sind die Vergleichs-Siebgewebe zweckmäßigerweise vom Siebgewebe der zu überwachenden Siebmaschine verschieden. Bei Abweichungen zwischen der aufgenommenen Schwingungsantwort und den bekannten Fehlersignaturen kann der Algorithmus einen Defekt auf Grundlage der angelernten Fehlersignaturen als solchen charakterisieren.

Im Falle einer Kombination aus einem künstlichen neuronalen Netz und überwachtem Lernen erfolgt das Training des Algorithmus vor der Inbetriebnahme der zu überwachenden Siebmaschine. Bevorzugt wird der Algorithmus dadurch trainiert, dass Schwingungsantworten von den Vergleichs-Siebgeweben zusammen mit einer entsprechenden Klassifizierung in den Algorithmus eingegeben werden. Anders ausgedrückt: Dem Algorithmus werden Schwingungsantworten, die zu unterschiedlichen Konfigurationen des Siebgewebes gehören, zusammen mit dem entsprechenden Zustand des Siebgewebes vorgegeben. Konfigurationen bzw. Zustände des Siebgewebes können sein: bestimmte Größe eines intakten Siebgewebes; bestimmte Größe eines defekten Siebgewebes mit darauf prasselndem Schüttgut; bestimmte Maschenweite eines defekten Siebgewebes mit der Position eines Risses; etc. Aus den vorgegebenen Konfigurationen mit entsprechenden Zuständen des Siebgewebes kann der Algorithmus Erkennungskriterien bestimmen, mit deren Hilfe der Algorithmus den Zustand eines Siebgewebes aus einer unbekannten aufgenommenen Schwingungsantwort des Siebgewebes der zu überwachenden Siebmaschine ermittelt.

Es ist zweckmäßig, den lernfähigen Algorithmus mit Schwingungsantworten von einem oder mehreren Vergleichs-Siebgeweben zu trainieren, die einer Beeinflussung durch Materialbeaufschlagung von Schüttgut, insbesondere einer Materialbeaufschlagung mit einer stetigen oder schwankenden Menge und/oder Korngröße des zu siebenden Materials unterliegen. Dies bietet den Vorteil, ein Siebgewebe für unterschiedliche Materialbeaufschlagung zu charakterisieren, wobei die Zustandserkennung des Siebgewebes trotz wechselnder Materialbeaufschlagung funktioniert. Zweckmäßigerweise kann auch der lernfähige Algorithmus mit Schwingungsantworten von einem oder mehreren Vergleichs-Siebgeweben trainiert werden, die keiner Beeinflussung durch Materialbeaufschlagung von Schüttgut unterliegen.

Es ist von Vorteil, wenn der lernfähige Algorithmus mit früheren durch den Schwingungsaufnehmer aufgenommenen Schwingungsantworten des Siebgewebes in Bezug steht. In diesem Fall handelt es sich bei dem Vergleichs-Siebgewebe um das Siebgewebe der zu überwachenden Siebmaschine selbst. Durch die Bezugnahme von früheren Schwingungsantworten des Siebgewebes kann der lernfähige Algorithmus trainiert werden, bevor dieser weitere Schwingungsantworten eines Siebgewebes auswertet und für die spätere Erkennung charakterisiert. Infolgedessen kann sich die Charakterisierungsvielfalt von Zuständen des Siebgewebes weiter erhöhen. Darüber hinaus ist es möglich, die Trainingsdauer des Systems durch die früheren aufgenommenen Schwingungsantworten deutlich herabzusetzen. Zweckmäßigerweise ist das Training des lernfähigen Algorithmus mit den früheren aufgenommenen Schwingungsantworten abgeschlossen, wobei der Algorithmus nach Abschluss des Trainings mit jeder weiteren Charakterisierung einer Schwingungsantwort nicht weiter dazu lernt. Vorzugsweise beträgt die Trainingsdauer nicht mehr als wenige Minuten.

Die im vorstehenden Absatz beschriebene Ausgestaltung ist besonders vorteilhaft für das sog. unüberwachte Lernen.

Zweckmäßigerweise basiert der lernfähigen Algorithmus auf dem unüberwachten Lernen (englisch: unsupervised learning). Es ist von Vorteil, Schwingungsantworten durch einen lernfähigen Algorithmus zu charakterisieren, welcher auf dem unüberwachten Lernen beruht.

Beim unüberwachten Lernen erfolgt die Charakterisierung der aufgenommenen Schwingungsantwort durch den Algorithmus mit Hilfe von Daten, die aus früher durch den Schwingungsaufnehmer aufgenommenen Schwingungsantworten des Siebgewebes der zu überwachenden Siebmaschine herrühren.

Das Training des Algorithmus kann im Falle des unüberwachten Lernens im laufenden Betrieb der zu überwachenden Siebmaschine fortdauern. So kann zweckmäßigerweise das Training durch den Vergleich von bereits charakterisierten Schwingungsantworten des Siebgewebes der zu überwachenden Siebmaschine erfolgen, welche vorab durch den Schwingungsaufnehmer aufgenommenen wurden. Damit ist eine Anpassung des lernfähigen Algorithmus, insbesondere des künstlichen neuronalen Netzes, durch wiederkehrende Muster bzw. Gesetzmäßigkeiten der aufgenommenen Schwingungsantworten möglich. Ähnlichkeiten der verschiedenen Schwingungsantworten können als Basis für die Anpassung von Gewichtungsfaktoren im neuronalen Netz dienen. Erkennbare Abweichungen in der aufgenommenen Schwingungsantwort von den zunächst erkannten Muster bzw. Gesetzmäßigkeiten können als veränderte Zustände des Siebgewebes charakterisiert werden.

Zweckmäßigerweise basiert der lernfähigen Algorithmus auf dem teilüberwachten Lernen. Es ist von Vorteil, Schwingungsantworten durch einen lernfähigen Algorithmus zu charakterisieren, welcher auf dem teilüberwachten Lernen beruht.

Das teilüberwachte Lernen stellt eine Kombination aus überwachtem und unüberwachtem Lernen dar. So kann der lernfähige Algorithmus, insbesondere das künstliche neuronale Netz, mit Hilfe von bekannten Fehlersignaturen in Schwingungsantworten von einem oder mehreren Vergleichs-Siebgeweben zunächst antrainiert und anschließend mit früheren durch den Schwingungsaufnehmer aufgenommenen Schwingungsantworten des Siebgewebes der zu überwachenden Siebmaschine weitertrainiert werden.

Es ist ferner zweckmäßig, das Lernen des lernfähigen Algorithmus auf ausgewählte Fehlersignaturen in früheren aufgenommenen Schwingungsantworten zu stützen. Diese können es dem Algorithmus erlauben, automatisch repräsentative bzw. wesentliche Merkmale der eingegebenen Schwingungsantworten zu bestimmen. Dadurch lassen sich Muster bzw. Gesetzmäßigkeiten von Schwingungsantworten auf Basis der eingegebenen früheren Schwingungsantworten zurückführen und auf eine endliche Anzahl von Parametern abbilden. Dies kann in vorteilhafter Weise dazu führen, dass sich der Algorithmus nach Eingabe der früheren Schwingungsantworten samt Fehlersignaturen robust gegenüber anderen (deutlich) abweichenden Schwingungsantworten verhält, insbesondere gegenüber Schwingungsantworten, welche einem starken statistischen Rauschen, z.B. bewirkt durch äußere Störeinflüsse, unterliegen.

Bevorzugt umfasst der lernfähige Algorithmus mindestens eine der folgenden Arten von künstlichen neuronalen Netzen: eine tiefgehende Boltzmann-Maschine (engl. Deep Boltzmann Machine), ein faltendes neuronales Netz (engl. Convolutional Neural Network), ein Siamesisches neuronales Netz (engl. Siamese Neural Network) oder ein Netz auf Basis der lernenden Vektorquantisierung (engl. Learning Vector Quantization).

Für die genannten Arten von künstlichen neuronalen Netzen lassen sich besonders schnell Muster bzw. Gesetzmäßigkeiten einer oder mehrerer aufgenommener Schwingungsantworten auf eine endliche Anzahl von robusten Parametern abbilden.

Wie vorstehend schon erwähnt, umfasst das erfindungsgemäße System zur Überwachung einer Siebmaschine weiter eine Anregungsvorrichtung, die dazu ausgestaltet ist, eine Schwingung auf das Siebgewebe der Siebmaschine aufzuprägen.

Weiterhin ist es von Vorteil, wenn die Anregungsvorrichtung eine Ballklopfeinrichtung und/oder eine Ultraschalleinrichtung umfasst. Eine Ballklopfeinrichtung ist besonders bevorzugt derart ausgelegt, eine Vielzahl von Bällen von unten gegen das Siebgewebe prallen zu lassen. Dadurch kann dem Siebgewebe eine chaotische Schwingung aufgeprägt werden. Diese chaotische Schwingung deckt zweckmäßigerweise ein breites Schwingungsspektrum ab. Eine derartige chaotische Schwingung ist damit als breitbandige Schwingung anzusehen.

Die Ultraschalleinrichtung ist so eingerichtet, dass sie dem Siebgewebe eine Ultraschallschwingung aufprägen kann. Im hochfrequenten Schwingungsspektrum sind beispielweise geringe Zustandsänderungen des Siebgewebes besser erkennbar. Zweckmäßigerweise ist die Anregungsvorrichtung ein piezoelektrischer Aktor. Dadurch lassen sich sehr einfach verschiedene Anregungsfrequenzen oder Anregungsamplituden erzeugen.

Es ist erfindungsgemäß aber auch möglich, dass eine Schwingung auf das Siebgewebe dadurch aufgeprägt wird, indem sich die Siebmaschine bewegt. In diesem Fall ist die Anregungsvorrichtung derart ausgestaltet, dass sie eine Bewegung der Siebmaschine bewirkt, die das Siebgewebe in Schwingungen versetzt. Zweckmäßig ist die bewirkte Bewegung eine Taumelbewegung und/oder eine Vibration.

Des Weiteren ist es möglich, dass die Schwingung auf das Siebgewebe aufgeprägt wird, indem Schüttgut auf das Siebgewebe fällt. Die Anregungsvorrichtung ist in diesem Fall weiter derart ausgestaltet, Schüttgut auf dem Siebgewebe zu verteilen.

Dadurch, dass die Anregungsvorrichtung dazu ausgelegt, ein breitbandiges Schwingungsspektrum auf das Siebgewebe der Siebmaschine aufzuprägen, wird der Vorteil erreicht, dass verschiedene auf dem Siebgewebe befindlichen Defekte, auch unter Einbeziehung von äußeren Störeinflüssen, mit der bzw. den ihnen entsprechenden Eigenfrequenz(en) des Siebgewebes angeregt werden. Durch Anregung der besagten Eigenfrequenz(en) können sich deutlich erkennbare Abweichungen der aufgenommenen Schwingungsantwort von der des Normalzustands des Siebgewebes ergeben. Diese Abweichungen ermöglichen dann eine sichere Erkennung von Zuständen des Siebgewebes oder die Einteilung in weitere Zustände bzw. Klassen von Zuständen. Schwingungsantworten eines defekten Siebgewebes lassen sich demnach deutlich von Schwingungsantworten eines intakten Siebgewebes oder von Schwingungsantworten, die von anderen Störeinflüssen beeinflusst sind, unterscheiden. Je nach Anzahl, Lokalisation und Ausprägung von Defekten bzw. Störstellen im Siebgewebe stellen sich ebenso verschiedene Resonanzfrequenzen des Siebgewebes ein. Je breitbandiger das aufgeprägte Schwingungsspektrum ist, desto größer ist damit auch die Wahrscheinlichkeit, Defekte und/oder Störstellen in der Schwingungsantwort zu detektieren, denn die Schwingungsantwort deckt ein umso vielfältigeres Frequenzspektrum ab, je breitbandiger das aufgeprägte Schwingungsspektrum ist. Dies liegt daran, dass der lernfähige Algorithmus mit Hilfe mehrerer Resonanzfrequenzen aus der Summe der breitbandigen Anregung Zustandsänderungen des Siebgewebes besser erkennt und Schwingungsantworten differenzierter charakterisieren kann.

Vorteilhafterweise ist die Anregungsvorrichtung derart ausgestaltet, periodisch ein Frequenzspektrum auf ein Siebgewebe aufzuprägen, um sequentiell verschiedene (Resonanz-)Frequenzen eines Schwingungsspektrums anzuregen und einen Frequenzgang und/oder einen Phasengang des Siebgewebes aufzunehmen. Der Vorteil ist, dass dadurch eine Durchsuchung der möglichen Resonanzfrequenzen des Siebgewebes und/oder der Eigenfrequenzen des Siebgewebes bei Vorhandensein von Defekten oder anderen Störeinflüssen erfolgt und somit eine differenziertere Erkennung von Zustandsänderungen am Siebgewebe möglich ist als durch die Anregung mit nur einer oder mit wenigen Frequenzen oder durch eine stetige breitbandige Anregung.

Vorteilhaft ist ferner, wenn die Charakterisierung der Schwingungsantwort durch den lernfähigen Algorithmus in den Normalzustand und den Fehlerzustand erfolgt. Wie oben bereits dargelegt, charakterisiert der Normalzustand das Siebgewebe ohne Defekt, der Fehlerzustand das Siebgewebe mit einem Defekt. Dies ermöglicht eine einfache Charakterisierung und Identifikation von intakten bzw. defekten Siebgeweben.

Vorzugsweise umfasst der Fehlerzustand zumindest einen Defekt aus der folgenden Liste: Risse im Siebgewebe; Abrasion des Siebgewebes; Dehnungen, Verstopfungen oder Maschenerweiterungen des Siebgewebes; noch nicht eingetretene, aber bereits im Entstehen begriffene Risse, Dehnungen, Verstopfungen oder Maschenerweiterungen des Siebgewebes; noch nicht vollständig ausgeprägte, aber sich erkennbar entwickelnde und erweiternde Risse, Abrasion, Dehnungen, Verstopfungen oder Maschenerweiterungen des Siebgewebes. Durch die Erkennung der Fehlerzustände mit den genannten Defekten kann eine umfassende Charakterisierung möglicher Defekte des Siebgewebes erstellt werden. Dies erlaubt eine besonders genaue Zustandserfassung des Siebgewebes. Aufgrund der Charakterisierung von bereits im Entstehen begriffenen Fehlerzuständen können ferner in vorteilhafter Weise fehlerhafte Siebveränderungen schon vor dem Auftreten eines ausgeprägten Siebrisses erkannt und das Siebgewebe entsprechend rechtzeitig ausgewechselt werden, ohne dass größere Mengen eines zu siebenden Schüttguts verworfen oder erneut gesiebt werden müssen. Ferner ist die Charakterisierung der Schwingungsantwort durch den lernfähigen Algorithmus unabhängig vom Alter des Siebgewebes, das typischerweise mit steigendem Alter immer wahrscheinlicher Defekte aufweist oder diese sich anbahnen, da dem lernfähige Algorithmus bereits vorliegende Abnutzungserscheinungen eines älteren Gewebes antrainiert werden können.

Darüber hinaus ist es zweckmäßig, wenn die Fehlerzustände Risse im Siebgewebe umfassen, welche zwischen 1 und 10 mm, vorzugsweise bereits zwischen 1 mm und 5 mm, betragen. Dadurch können Schwingungsantworten ausreichend präzise charakterisiert sowie der Durchsatz nicht spezifikationsgerechtes Schüttguts gröberer Körnung effektiv reduziert oder verhindert werden.

Vorteilhafterweise ist die Signalverarbeitungsvorrichtung weiter dazu ausgelegt ist, eine Fourier-Analyse, besonders bevorzugt eine Fast-Fourier-Analyse, eine Wavelet-Analyse oder eine Constant-Q-Analyse der Schwingungsantwort durchzuführen. Genannte Analyseverfahren umfassen zweckmäßigerweise die Umwandlung der Schwingungsantwort mittels Fourier-, Wavelet- oder Constant-Q-Transformation vom Zeit- in den Frequenzraum. Die transformierte Schwingungsantwort ist daher eine frequenzabhängige Funktion. Durch die Erkennung bestimmter Frequenzanteile in der transformierten Schwingungsantwort kann auf das Eintreten von Zustandsänderungen des Siebgewebes geschlossen werden, da z.B. Defekte wie einzelne Risse im Siebgewebe, andere, insbesondere höherfrequente, Anteile im Frequenzspektrum erzeugen als das intakte Siebgewebe. Die Charakterisierung der Schwingungsantwort mit Hilfe von Fehlersignaturen im Frequenzraum kann daher aussagekräftiger und damit vorteilhaft sein.

Zweckmäßigerweise ist die Signalverarbeitungsvorrichtung derart ausgestaltet, eine Autokorrelations-Methode oder eine Kreuzkorrelations-Methode oder eine Inversions-Methode, insbesondere eine Konjugierte-Gradienten-Inversion durchzuführen. Mit Hilfe der genannten Methoden können verschiedene zu charakterisierende Schwingungsantworten in Bezug gesetzt werden, um unterschiedliche Zustände des Siebgewebes auf Basis dieser Schwingungsantworten differenzierter charakterisieren zu können.

Vorteilhafterweise ist der Schwingungsaufnehmer als Luftschallaufnehmer ausgestaltet, der oberhalb oder unterhalb des Siebgewebes oder in der Umgebung des Siebgewebes anordenbar ist. Der Schwingungsaufnehmer kann auch als Körperschallaufnehmer ausgestaltet sein, der an dem Siebgewebe oder an einem Siebkörper der Siebmaschine anordenbar ist. Für gewöhnlich werden Schwingungen des Siebgewebes unter Materialbeaufschlagung von Schüttgut durch das Siebgewebe teilweise stark gedämpft. Durch diese bevorzugten und kombinierbaren Anordnungen der Schwingungsaufnehmer werden jedoch gerade genannte Dämpfungseffekte umgangen und so qualitativ besonders hochwertige Schwingungsantworten erhalten, die sich am besten zur Auswertung eignen. Es ist zweckmäßig, mindestens einen tri-axialen und/oder einen uniaxialen Sensor für die Aufnahme der Schwingungsantworten, bevorzugt zwei tri-axiale Sensoren, besonders bevorzugt einen uni-axialen Sensor, pro Siebgewebe zu verwenden.

Vorteilhafterweise ist der Schwingungsaufnehmer dazu ausgelegt, die Schwingungsantwort des Siebgewebes durch Zeitintervallfilterung, Amplitudenfilterung oder Frequenzfilterung aus einer aufgenommenen Schwingung zu gewinnen. Dies ermöglicht die Ausfilterung von Störsignalen, die sich hinsichtlich Zeitintervall, Amplitudenbereich oder Frequenzbereich von der Schwingungsantwort des Siebgewebes unterscheiden.

Vorteilhafterweise weist das Siebgewebe eine Maschenweite kleiner als 5 mm, bevorzugt kleiner als 1 mm, besonders bevorzugt kleiner als 100 µm auf. Dadurch lässt sich Schüttgut grober bis hin zu feiner Körnung fraktionieren.

Vorzugweise ist die aufgeprägte Schwingung eine Schallschwingung, besonders bevorzugt eine Körperschallschwingung. Diese breitet sich in dem Siebgewebe gut aus und lässt so Zustandsänderungen im Siebgewebe deutlich erkennen. Besonders bevorzugt ist die aufgeprägte Schwingung eine Ultraschallschwingung. Wird eine Ultraschallschwingung auf das Siebgewebe aufgeprägt, können sich - aufgrund der hohen Frequenzen der aufgeprägten Schwingung - Veränderungen des Siebgewebes in dessen Schwingungsantwort besonderes deutlich von Schwingungsantworten des unveränderten Zustand abheben.

Es ist auch möglich, dass die Siebmaschine mehrere Siebkörper umfasst.

Vorteilhafterweise, umfasst die erfindungsgemäße Siebmaschine einen Siebrahmen, in dem das Siebgewebe eingespannt oder auf dem das Siebgewebe aufgespannt ist. Der Siebrahmen kann entweder innenliegend oder außenliegend zum Siebkörper angeordnet sein. Durch die Anordnung der Komponenten der Siebmaschinen samt Siebrahmen ist das Siebgewebe im Falle eines Defektes oder einer Abnutzung sehr einfach auswechselbar. Der lernfähige Algorithmus kann ferner nach einem Wechsel von Siebgewebe und Siebrahmen vorteilhafterweise neu antrainiert werden. So ist es beispielweise möglich, fertigungsbedingte Schwankungen der Siebspannung mitzuberücksichtigen. Es ist aber auch möglich, das Siebgewebe in den Siebkörper einzuspannen. Zweckmäßig ist das Siebgewebe direkt in den Siebkörper eingespannt, ohne dass ein oder mehrere Siebrahmen verwendet werden. Die Spannung des Siebgewebes wird dann durch geeignete Haltevorrichtungen erzeugt, die am Siebkörper angebracht sind.

Des Weiteren ist es vorteilhaft, wenn die Siebmaschine ein segmentiertes Siebgewebe aufweist. Ein segmentiertes Siebgewebe umfasst mehrere einteilige, auf einzelnen segmentartigen Siebrahmen an- oder aufgebrachte Siebgewebe, die auf einer Ebene nebeneinander angeordnet sein können. Dies reduziert unter anderem die Kosten bei einem entstandenen Siebgewebedefekt, da das Siebgewebe segmentweise ausgetauscht werden kann.

Vorteilhafterweise umfasst die Siebmaschine weitere Siebgewebe, die zweckmäßigerweise übereinander angeordnet sind. Mit Hilfe von Siebgeweben unterschiedlicher Maschenweite kann die Fraktionierung des Schüttguts stufenweise von grober zu feiner Körnung vorgenommen werden.

Es ist auch zweckmäßig, ein Siebgewebe aus Metall oder Kunststoff zu verwenden. Im Gegensatz zu konventionellen Systemen zur Siebrisserkennung, ist eine Erkennung von Defekten im Siebgewebe mit dem erfindungsgemäßen System in beiden Fällen, d.h. für Siebgewebe aus Metall oder Kunststoff, möglich.

Es ist von Vorteil, wenn die Siebmaschine eine Taumelsiebmaschine ist, die derart eingerichtet ist, dass der Siebprozess durch eine Taumelbewegung des Siebkörpers durchgeführt wird. Der Siebprozess ist in einer Taumelsiebmaschine durch eine Taumelbewegung eines Siebkörpers durchführbar. Die Aufprägung einer Schwingung auf das Siebgewebe kann zweckmäßigerweise durch diese Taumelbewegung bewirkt werden. Die Schwingungsantwort des Siegewebes, die mithilfe des erfindungsgemäßen lernfähigen Algorithmus charakterisiert wird, steht mit dieser Schwingung in Bezug. In diesem Fall umfasst das System zur Überwachung der Siebmaschine eine Anregungsvorrichtung, die derart ausgestaltet ist, dass sie eine Bewegung, besonders zweckmäßig eine Taumelbewegung, der Siebmaschine bewirkt, die das Siebgewebe in Schwingungen versetzt. Es ist aber auch möglich, dass die Siebmaschine zusätzlich eine Anregungsvorrichtung bzw. eine weitere Anregungsvorrichtung umfasst, die dem Siebgewebe eine Schwingung aufprägt. Dadurch kann die Schwingungsanregung unterstützt werden, so dass neben der Risserkennung auch die Siebfunktion verbessert wird. Auch ist es zweckmäßig, wenn die Siebmaschine eine Vibrationssiebmaschine ist.

Zweckmäßigerweise ist der Schwingungsaufnehmer an dem Siebrahmen und/oder dem Siebkörper angeordnet. Dies hat den Vorteil, dass Installations- und Wartungsarbeiten an den Schwingungsaufnehmern einfach und sicher umsetzbar sind.

Vorteilhafterweise liegt der Durchmesser des Siebgewebes zwischen 600 und 2900 mm.

Gemäß einem weiteren Aspekt betrifft die Erfindung ein Verfahren zur Überwachung einer Siebmaschine, welches im Folgenden beschrieben wird.

Das erfindungsgemäße Verfahren zur Überwachung einer Siebmaschine umfasst die folgenden Verfahrensschritte:
- Aufprägen eines breitbandigen Schwingungsspektrums auf ein Siebgewebe der Siebmaschine;
- Aufnehmen einer Schwingungsantwort des Siebgewebes der Siebmaschine, wobei die Schwingungsantwort (250) die Reaktion des Siebgewebes auf das aufgeprägte breitbandige Schwingungsspektrum angibt;
   und
- Charakterisierung der aufgenommenen Schwingungsantwort mit einem lernfähigen Algorithmus, der auf Methoden der künstlichen Intelligenz basiert, und der mit
- Schwingungsantworten von einem oder mehreren Vergleichs-Siebgeweben in Bezug steht,
- wobei die Charakterisierung der aufgenommenen Schwingungsantwort mit Hilfe von Fehlersignaturen erfolgt, die kennzeichnend sind für Abweichungen der aufgenommenen Schwingungsantwort zwischen einem Normalzustand des Siebgewebes und einem Fehlerzustand des Siebgewebes, wobei der Normalzustand das Siebgewebe ohne Defekt charakterisiert, der Fehlerzustand das Siebgewebe mit einem Defekt charakterisiert.

Besonders bevorzugt steht der lernfähige Algorithmus mit Schwingungsantworten von einer Vielzahl von Vergleichs-Siebgeweben in Bezug.

Vorzugsweise umfassen die Vergleichs-Siebgewebe Siebgewebe, die von dem Siebgewebe der überwachten Siebmaschine verschieden sind.

Vorzugweise steht der lernfähige Algorithmus mit früheren aufgenommenen Schwingungsantworten des Siebgewebes der überwachten Siebmaschine in Bezug.

Vorteile des erfindungsgemäßen Verfahrens und dessen Ausführungsformen sowie weitere zweckmäßige Ausführungsformen sind dem erfindungsgemäßen System, wie oben beschrieben, entsprechend zu entnehmen.

Gemäß einem weiteren Aspekt der Erfindung wird ein Computerprogramm zur Überwachung einer Siebmaschine bereitgestellt, das so angepasst ist, dass es das vorstehend beschriebene Verfahren ausführt.

Eine bevorzugte Ausführungsform der vorliegenden Erfindung wird anhand der Zeichnung näher erläutert.

Es zeigt:

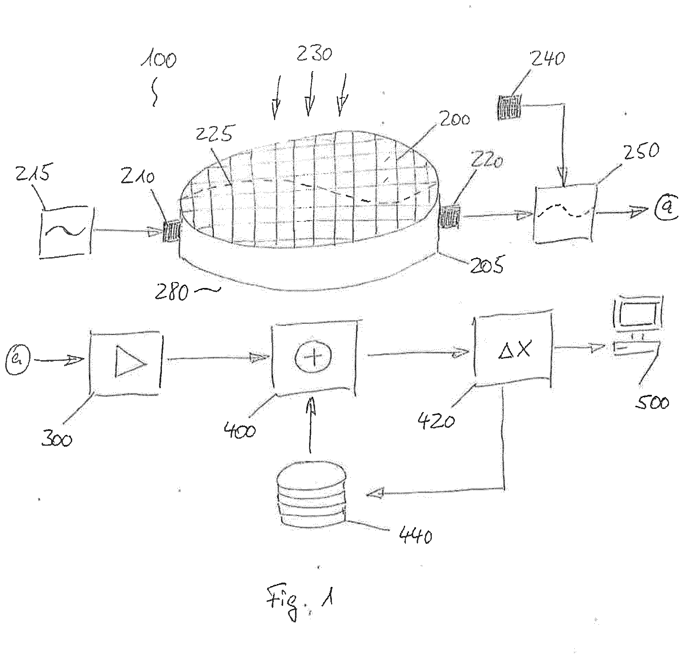

Fig. 1 eine schematische Ansicht eines erfindungsgemäßen Systems.

Figur 1 zeigt eine schematische Ansicht eines erfindungsgemäßen Systems 100 zur Überwachung der Siebmaschine 280. Im bestimmungsgemäßen Gebrauch wird das zu siebende Schüttgut 230 auf das Siebgewebe 200 geschüttet, welches in einem Siebkörper 205 eingespannt und Teil der Siebmaschine 280 ist. Es ist aber auch möglich, dass das Siebgewebe in oder auf einen Siebrahmen gespannt ist, der an den Siebkörper 205 gekoppelt wird. Der Siebkörper 205 führt in der Siebmaschine eine mechanische Siebbewegung aus, durch die die feinkörnige Fraktion von der grobkörnigen Fraktion getrennt wird, indem die feinkörnige Fraktion möglichst vollständig durch die Maschen des Siebgewebes 200 hindurch fällt, während die grobkörnige Fraktion wiederum möglichst vollständig auf dem Siebgewebe 200 verbleibt und von dort abtransportiert wird. Im Fall einer Taumelsiebmaschine ist die mechanische Siebbewegung eine im Wesentlichen kreisförmige Taumelbewegung. Der mechanisch angeregte Siebprozess kann durch Eintrag einer zusätzlichen Schwingung, insbesondere einer Ultraschallschwingung oder einer durch eine Ballklopfeinrichtung erzeugte Schwingung, unterstützt werden.

Gemäß Figur 1 dient eine Anregungsvorrichtung 210, die eine Schwingungsanregung 215 auf den Siebkörper 205 aufbringt und damit dem Siebgewebe 200 eine Schwingung 225 aufprägt, vorliegend rein beispielhaft nicht primär der Unterstützung des Siebprozesses, sondern der dem Eintrag einer solchen zusätzlichen Schwingung zur besseren Erkennung/Vorhersage von Defekten im Siebgewebe. Die Anregungsvorrichtung kann aber auch den Mechanismus umfassen, der die Siebmaschine 280 bzw. den Siebkörper 205 bewegt, und damit bewirkt, dass dem Siebgewebe 200 eine Schwingung aufgeprägt wird. Hierzu wird eine Schwingungsantwort 250 des Siebgewebes 200, die sich in charakteristischer Weise von der Schwingungsanregung 215 unterscheiden kann, von wenigstens einem Schwingungsaufnehmer 220, 240, insbesondere einen Luftschallaufnehmer 240 und/oder einen Körperschallaufnehmer 220, aufgenommen und einer digitalen Signalverarbeitungsvorrichtung 300 zugeleitet, mittels derer neben einer analogen Verstärkung, Filterung und Vorverarbeitung insbesondere eine Analog-DigitalWandlung und eine weitere digitale Verarbeitung wie z.B. die Filterung und Ausblendung von Störgeräuschen ausgeführt werden können. Der Luftschallaufnehmer 240 kann hierbei oberhalb oder unterhalb des Siebgewebes 200 sowie neben dem Siebgewebe 200 angeordnet sein. Die Schwingungsaufnehmer 220, 240 können an verschiedenen Stellen des Siebkörpers 205, des Siebrahmens (in Figur 1 nicht dargestellt) oder am Siebgewebe 200 selbst angeordnet sein.

Die digitalisierte und aufbereitete Schwingungsantwort 250 wird sodann einem Auswertesystem 400, 420, 440 der Signalverarbeitungsvorrichtung 300 zugeleitet, welches einen lernfähigen Algorithmus nach den Methoden der künstlichen Intelligenz aufweist, der zur Charakterisierung der Schwingungsantwort 250 eine Vergleichskomponente 400 zum Vergleich der aufbereiteten Schwingungsantwort 250 mit gespeicherten Fehlersignaturen in Schwingungsantworten einer Signatur- und Modelldatenbank 440 umfasst. Weiterhin umfasst das Auswertesystem eine Signaturerkennung 420, die aus verschiedenen, bei einem Vergleich verbleibenden Differenzwerten ΔX den Zustand des Siebgewebes bzw. Art und Umfang eines aufgetretenen oder sich ankündigenden Defekts, wie z.B. eines Siebrisses oder einer Siebdehnung erkennen und mittels einer Darstellungskomponente 500 darstellen kann.

Die Vergleichskomponente 400 und die Signaturerkennung 420 können sich hierbei an verschiedene Siebgewebe, Siebkörper, Siebgeometrien und Siebtypen anpassen und normale, kontinuierliche Abnutzungsprozesse des Siebgewebes sowie unterschiedliche Konsistenzen des Schüttgut kompensieren und diese von Fehlersignaturen in Schwingungsantworten, welche auf Zustandsänderungen des Siebgewebes beruhen, unterscheiden. Durch kontinuierliches Trainieren des lernfähigen Algorithmus kann die Signaturerkennung 420 zudem neue Fehlersignaturen charakterisieren und in die Signaturdatenbank 440 eintragen, so dass die zukünftige Erkennungsleistung des Auswertesystems 400 verbessert werden kann. Die Signaturerkennung 420 kann insbesondere statistische Verfahren, Lernverfahren, Korrelationsverfahren, Expertensysteme und neuronale Netze umfassen, die zur Fehlersignaturerkennung besonders geeignet sind. Mit Hilfe der Signaturerkennung 420 soll die Reaktionszeit zwischen der Entstehung eines Siebdefekts und dessen Erkennung unter 60 Sekunden, bevorzugt unter 30 Sekunden, besonders bevorzugt 10 Sekunden betragen.

### Liste der Bezugszeichen

- 100: System zur Überwachung einer Siebmaschine
- 200: Siebgewebe
- 205: Siebkörper
- 210: Anregungsvorrichtung
- 215: Schwingungsanregung
- 220: Schwingungsaufnehmer, Körperschallaufnehmer
- 225: Aufgeprägte Schwingung
- 230: Schüttgut
- 240: Schwingungsaufnehmer, Luftschallaufnehmer
- 250: Schwingungsantwort
- 280: Siebmaschine
- 300: Signalverarbeitungsvorrichtung
- 400: Auswertesystem der Signalverarbeitungsvorrichtung 300
- 420: Signaturerkennung des Auswertesystems 400
- 440: Signaturdatenbank des Auswertesystems 400
- 500: Darstellungskomponente

## Patentansprüche

1. System (100) zur Überwachung einer Siebmaschine (280), umfassend:
- die Siebmaschine (280) mit einem Siebkörper (205) und einem Siebgewebe (200);
- eine Anregungsvorrichtung (210), die dazu ausgelegt ist, ein breitbandiges Schwingungsspektrum auf das Siebgewebe (200) der Siebmaschine (280) aufzuprägen;
- einen Schwingungsaufnehmer (220, 240), der dazu ausgestaltet ist, eine Schwingungsantwort (250) des Siebgewebes (200) der Siebmaschine (280) aufzunehmen, wobei die Schwingungsantwort (250) die Reaktion des Siebgewebes (200) auf das aufgeprägte breitbandige Schwingungsspektrum angibt; und
- eine Signalverarbeitungsvorrichtung (300, 400, 420, 440) zur digitalen Verarbeitung und Auswertung der Schwingungsantwort (250),
wobei
die Signalverarbeitungsvorrichtung (300, 400, 420, 440) einen lernfähigen Algorithmus umfasst, der auf Methoden der künstlichen Intelligenz basiert, der mit Schwingungsantworten von einem oder mehreren Vergleichs-Siebgeweben in Bezug steht, und der dazu ausgelegt ist, die durch den Schwingungsaufnehmer (220, 240) aufgenommene Schwingungsantwort (250) zu charakterisieren,
- wobei die Charakterisierung der aufgenommenen Schwingungsantwort (250) mit Hilfe von Fehlersignaturen erfolgt, die kennzeichnend sind für Abweichungen der aufgenommenen Schwingungsantwort (250) zwischen einem Normalzustand des Siebgewebes (200) und einem Fehlerzustand des Siebgewebes (200), wobei der Normalzustand das Siebgewebe (200) ohne Defekt charakterisiert, der Fehlerzustand das Siebgewebe (200) mit einem Defekt charakterisiert.

2. System (100) gemäß Anspruch 1, wobei die Vergleichs-Siebgewebe Siebgewebe umfassen, die von dem Siebgewebe (200) der zu überwachenden Siebmaschine (280) verschieden sind.

3. System (100) gemäß einem der vorhergehenden Ansprüche, wobei der lernfähige Algorithmus mit früheren durch den Schwingungsaufnehmer (220, 240) aufgenommenen Schwingungsantworten (250) des Siebgewebes (200) in Bezug steht.

4. System (100) gemäß einem der vorhergehenden Ansprüche, wobei die Anregungsvorrichtung (210) eine Ballklopfeinrichtung und/oder eine Ultraschalleinrichtung umfasst.

5. System (100) gemäß einem der vorhergehenden Ansprüche, wobei die Charakterisierung der Schwingungsantwort (250) durch den lernfähigen Algorithmus in den Normalzustand und den Fehlerzustand erfolgt.

6. System (100) gemäß einem der vorhergehenden Ansprüche, wobei der Fehlerzustand zumindest einen Defekt aus der folgenden Liste umfasst: Risse im Siebgewebe (200); Abrasion des Siebgewebes (200); Dehnungen, Verstopfungen oder Maschenerweiterungen des Siebgewebes (200); noch nicht eingetretene, aber bereits im Entstehen begriffene Risse, Dehnungen, Verstopfungen oder Maschenerweiterungen des Siebgewebes (200); noch nicht vollständig ausgeprägte, aber sich erkennbar entwickelnde und erweiternde Risse, Abrasion, Dehnungen, Verstopfungen oder Maschenerweiterungen des Siebgewebes (200).

7. System (100) gemäß einem der vorhergehenden Ansprüche, wobei die Signalverarbeitungsvorrichtung (300, 400, 420, 440) weiter dazu ausgelegt ist, eine Fourier-Analyse, eine Wavelet-Analyse oder Constant-Q-Analyse der Schwingungsantwort (250) durchzuführen.

8. System (100) gemäß einem der vorhergehenden Ansprüche, wobei der Schwingungsaufnehmer ausgestaltet ist als Luftschallaufnehmer (240), der oberhalb oder unterhalb des Siebgewebes (200) oder in der Umgebung des Siebgewebes (200) anordenbar ist, oder als Körperschallaufnehmer (220), der an dem Siebgewebe (200) oder an einem Siebkörper (205) der Siebmaschine (280) anordenbar ist.

9. System (100) gemäß einem der vorhergehenden Ansprüche, wobei der Schwingungsaufnehmer (220, 240) dazu ausgelegt ist, die Schwingungsantwort (250) des Siebgewebes (200) durch Zeitintervallfilterung, Amplitudenfilterung oder Frequenzfilterung aus einer aufgenommenen Schwingung zu gewinnen.

10. System (100) nach einem der vorhergehenden Ansprüche, wobei die Siebmaschine (280) eine Taumelsiebmaschine ist, die derart eingerichtet ist, dass der Siebprozess durch eine Taumelbewegung des Siebkörpers (205) durchgeführt wird.

11. Verfahren zur Überwachung einer Siebmaschine (280), das die folgenden Verfahrensschritte umfasst:
- Aufprägen eines breitbandigen Schwingungsspektrums auf ein Siebgewebe (200) der Siebmaschine (280);
- Aufnehmen einer Schwingungsantwort (250) des Siebgewebes (200) der Siebmaschine (280), wobei die Schwingungsantwort (250) die Reaktion des Siebgewebes (200) auf das aufgeprägte breitbandige Schwingungsspektrum angibt;
und
- Charakterisierung der aufgenommenen Schwingungsantwort (250) mit einem lernfähigen Algorithmus, der auf Methoden der künstlichen Intelligenz basiert, und der mit Schwingungsantworten (250) von einem oder mehreren Vergleichs-Siebgeweben in Bezug steht,
- wobei die Charakterisierung der aufgenommenen Schwingungsantwort (250) mit Hilfe von Fehlersignaturen erfolgt, die kennzeichnend sind für Abweichungen der aufgenommenen Schwingungsantwort (250) zwischen einem Normalzustand des Siebgewebes (200) und einem Fehlerzustand des Siebgewebes (200), wobei der Normalzustand das Siebgewebe (200) ohne Defekt charakterisiert, der Fehlerzustand das Siebgewebe (200) mit einem Defekt charakterisiert.

12. Verfahren gemäß Anspruch 11, wobei die Vergleichs-Siebgewebe Siebgewebe umfassen, die von dem Siebgewebe (200) der überwachten Siebmaschine (280) verschieden sind.

13. Verfahren gemäß einer der Ansprüche 11 oder 12, wobei der lernfähige Algorithmus mit früheren aufgenommenen Schwingungsantworten (250) des Siebgewebes (200) in Bezug steht.

14. Computerprogramm, umfassend Befehle, die bewirken, dass das System (100) nach einem der Ansprüche 1-10 die Verfahrensschritte gemäß einem der Ansprüche 11 bis 13 ausführt.

## Claims

1. A system (100) for monitoring a screening machine (280), comprising:
- the screening machine (280) with a screen body (205) and a screen fabric (200);
- an excitation device (210) configured to impress to impress a broadband vibration spectrum to the screen fabric (200) of the screening machine (280);
- a vibration sensor (220, 240) configured to record a vibration response (250) of the screen fabric (200) of the screening machine (280), wherein the vibration response (250) indicates the reaction of the screen fabric (200) on the impressed broadband vibration spectrum; and
- a signal processing device (300, 400, 420, 440) for digitally processing and evaluating the vibration response (250),
wherein
the signal processing device (300, 400, 420, 440) comprises an adaptive algorithm which is based on the methods of artificial intelligence, is related to vibration responses of one or several comparative screen fabrics, and is adapted to characterize the vibration response (250) recorded by the vibration sensor (220, 240),
- wherein the characterization of the recorded vibration response (250) is performed with the aid of error signatures which are characteristic for deviations of the recorded vibration responses (250) between a normal state of the screen fabric (200) and an error state of the screen fabric (200), wherein the normal state characterizes the screen fabric (200) having no defect, and the error state characterizes the screen fabric (200) having a defect.

2. The system (100) according to claim 1, wherein the comparative screen fabrics comprise screen fabrics which are different from the screen fabric (200) of the screening machine (280) to be monitored.

3. The system (100) according to anyone of the foregoing claims, wherein the adaptive algorithm is related to previous vibration responses (250) of the screen fabric (200) recorded by the vibration sensor (220, 240).

4. The system (100) according to anyone of the foregoing claims, wherein the excitation device (210) comprises a ball cleaning device and/or an ultrasonic device.

5. The system (100) according to anyone of the foregoing claims, wherein the characterization of the vibration response (250) into the normal state and the error state is carried out by the adaptive algorithm.

6. The system (100) according to anyone of the foregoing claims, wherein the error state comprises at least one defect from the following list: tears in the screen fabric (200); abrasion of the screen fabric (200); extensions, blindings or cloggings, or mesh expansions of the screen fabric (200); tears, extensions, blindings or cloggings, or mesh expansions of the screen fabric (200) not yet occurred, but already in the state of developing; tears, abrasion, extensions, blindings or cloggings, or mesh expansions of the screen fabric (200) not yet fully developed, but recognizably developing and expanding.

7. The system (100) according to anyone of the foregoing claims, wherein the signal processing device (300, 400, 420, 440) is furthermore configured to perform a Fourier analysis, a Wavelet analysis, or a Constant Q analysis of the vibration response (250).

8. The system (100) according to anyone of the foregoing claims, wherein the vibration sensor is implemented as an airborne sound sensor (240) which can be arranged above or below the screen fabric (200) or in the surroundings of the screen fabric (200), or as a structure-borne sound sensor (220) which can be arranged at the screen fabric (200) or at a screen body (205) of the screening machine (280).

9. The system (100) according to anyone of the foregoing claims, wherein the vibration sensor (220, 240) is configured to obtain the vibration response (250) of the screen fabric (200) from a recorded vibration by means of a time interval filtering, an amplitude filtering, or a frequency filtering.

10. The system (100) according to anyone of the foregoing claims, wherein the screening machine (280) is a tumbler screening machine which is configured such that the screening process is carried out by a tumbling motion of the screen body (205).

11. A method for monitoring a screening machine (280), said method comprising the following method steps:
- impressing a broadband vibration spectrum to a screen fabric (200) of the screening machine (280); .
- recording a vibration response (250) of the screen fabric (200) of the screening machine (280), wherein the vibration response (250) indicates the reaction of the screen fabric (200) on the impressed broadband vibration spectrum;
and
- characterizing the recorded vibration response (250) by means of an adaptive algorithm which is based on methods of artificial intelligence and is related to vibration responses (250) of one or several comparative screen fabrics,
- wherein the characterizing of the recorded vibration response (250) is performed with the aid of error signatures which are characteristic for deviations of the recorded vibration response (250) between a normal state of the screen fabric (200) and an error state of the screen fabric (200), wherein the normal state characterizes the screen fabric (200) having no defect, and the error state characterizes the screen fabric (200) having a defect.

12. The method according to claim 11, wherein the comparative screen fabrics comprise screen fabrics which are different from the screen fabric (200) of the monitored screening machine (280).

13. The method according to anyone of claims 11 or 12, wherein the adaptive algorithm is related to previous, recorded vibration responses (250) of the screen fabric (200).

14. A computer program comprising instructions causing the system (100) according to anyone of claims 1-10 to perform the method steps according to anyone of claims 11 to 13.

## Revendications

1. Système (100) de surveillance d'une machine de criblage (280), comprenant : - la machine de criblage (280) dotée d'un corps de criblage (205) et d'une toile de criblage (200) ;
- un dispositif d'excitation (210) qui est conçu pour appliquer un spectre vibratoire à large bande à la toile de criblage (200) de la machine de criblage (280) ;
- un capteur de vibrations (220, 240) qui est conçu pour capter une réponse vibratoire (250) de la toile de criblage (200) de la machine de criblage (280), la réponse vibratoire (250) indiquant la réaction de la toile de criblage (200) au spectre vibratoire à large bande appliqué ; et
- un dispositif de traitement de signaux (300, 400, 420, 440) pour le traitement et l'évaluation numériques de la réponse vibratoire (250),
dans lequel
le dispositif de traitement de signaux (300, 400, 420, 440) comprend un algorithme adaptatif basé sur des méthodes de l'intelligence artificielle, qui se réfère aux réponses vibratoires d'une ou plusieurs toiles de criblage de comparaison et qui est conçu pour caractériser la réponse vibratoire (250) enregistrée par le capteur de vibrations (220, 240),
- dans lequel la caractérisation de la réponse vibratoire enregistrée (250) est effectuée à l'aide de signatures de défaut qui sont caractéristiques d'écarts de la réponse vibratoire enregistrée (250) entre un état normal de la toile de criblage (200) et un état de défaut de la toile de criblage (200), l'état normal caractérisant la toile de criblage (200) sans défaut, l'état de défaut caractérisant la toile de criblage (200) avec un défaut.

2. Système (100) selon la revendication 1, dans lequel les toiles de criblage de comparaison comprennent des toiles de criblage qui sont différentes de la toile de criblage (200) de la machine de criblage à surveiller (280).

3. Système (100) selon l'une des revendications précédentes, dans lequel l'algorithme adaptatif se réfère à des réponses vibratoires précédentes (250) de la toile de criblage (200) enregistrées par le capteur de vibrations (220, 240).

4. Système (100) selon l'une des revendications précédentes, dans lequel le dispositif d'excitation (210) comprend un moyen de frappe à balles et/ou un moyen à ultrasons.

5. Système (100) selon l'une des revendications précédentes, dans lequel la réponse vibratoire (250) est **caractérisée par** l'algorithme adaptatif à l'état normal et à l'état de défaut.

6. Système (100) selon l'une des revendications précédentes, dans lequel l'état de défaut comprend au moins un défaut de la liste suivante : fissures dans la toile de criblage (200) ; abrasion de la toile de criblage (200) ; étirements, colmatages ou élargissements des mailles de la toile de criblage (200) ; fissures, étirements, colmatages ou élargissements des mailles de la toile de criblage (200) non encore apparus mais sur le point de se produire ; fissures, abrasion, étirements, colmatages ou élargissements des mailles de la toile de criblage (200) non encore complètement marqués mais en train de se développer et de s'étendre de façon perceptible.

7. Système (100) selon l'une des revendications précédentes, dans lequel le dispositif de traitement de signaux (300, 400, 420, 440) est en outre conçu pour effectuer une analyse de Fourier, une analyse par ondelettes ou une analyse à Q constant de la réponse vibratoire (250).

8. Système (100) selon l'une des revendications précédentes, dans lequel le capteur de vibrations est conçu sous la forme d'un capteur de bruit aérien (240) qui peut être disposé au-dessus ou au-dessous de la toile de criblage (200) ou au voisinage de la toile de criblage (200), ou sous la forme d'un capteur de bruit de structure (220) qui peut être disposé sur la toile de criblage (200) ou sur un corps de criblage (205) de la machine de criblage (280).

9. Système (100) selon l'une des revendications précédentes, dans lequel le capteur de vibrations (220, 240) est conçu pour obtenir la réponse vibratoire (250) de la toile de criblage (200) par filtrage par intervalles de temps, filtrage en amplitude ou filtrage en fréquence à partir d'une vibration enregistrée.

10. Système (100) selon l'une des revendications précédentes, dans lequel la machine de criblage (280) est une machine de criblage à nutation qui est configurée de telle sorte que le processus de criblage est effectué par un mouvement de nutation du corps de criblage (205).

11. Procédé de surveillance d'une machine de criblage (280), comprenant les étapes suivantes :
- application d'un spectre vibratoire à large bande à une toile de criblage (200) de la machine de criblage (280) ;
- enregistrement d'une réponse vibratoire (250) de la toile de criblage (200) de la machine de criblage (280), la réponse vibratoire (250) indiquant la réponse de la toile de criblage (200) au spectre vibratoire à large bande appliqué ; et
- caractérisation de la réponse vibratoire enregistrée (250) à l'aide d'un algorithme adaptatif basé sur des méthodes de l'intelligence artificielle, qui se réfère aux réponses vibratoires (250) d'une ou plusieurs toiles de criblage de comparaison,
- dans lequel la caractérisation de la réponse vibratoire enregistrée (250) est effectuée à l'aide de signatures de défaut qui sont caractéristiques d'écarts de la réponse vibratoire enregistrée (250) entre un état normal de la toile de criblage (200) et un état de défaut de la toile de criblage (200), l'état normal caractérisant la toile de criblage (200) sans défaut, l'état de défaut caractérisant la toile de criblage (200) avec un défaut.

12. Procédé selon la revendication 11, dans lequel les toiles de criblage de comparaison comprennent des toiles de criblage qui sont différentes de la toile de criblage (200) de la machine de criblage surveillée (280).

13. Procédé selon l'une des revendications 11 ou 12, dans lequel l'algorithme adaptatif se réfère à des réponses vibratoires (250) précédentes enregistrées de la toile de criblage (200).

14. Programme informatique comprenant des commandes qui amènent le système (100) selon l'une des revendications 1 à 10 à exécuter les étapes du procédé selon l'une des revendications 11 à 13.
